# EUROPEAN PATENT SPECIFICATION

(11) **EP 4 575 275 B1**
(45) Date of publication and mention of the grant of the patent: **15.04.2026**
(21) Application number: 24218712.8
(22) Date of filing: 10.12.2024
(51) Int. Cl.: F16J 9/14, F16J 9/20

(54) **PISTON RING WITH TRAPEZOIDAL OPENNING**
KOLBENRING MIT TRAPEZOIDER ÖFFNUNG
SEGMENT DE PISTON À OUVERTURE TRAPÉZOIDALE

(30) Priority: 20.12.2023 CN 202323490565 U
(43) Date of publication of application: 25.06.2025
(73) Proprietor: MAHLE Automotive Technologies (China) Co., Ltd., Shanghai Fengxian 201401 (CN); MAHLE International GmbH, 70376 Stuttgart (DE)
(72) Inventor: LI, Bluse, Shanghai, 201401 (CN)
(74) Representative: BRP Renaud & Partner mbB Rechtsanwälte Patentanwälte Steuerberater

(56) References cited:
- CN-A- 1 916 448
- CN-B- 102 235 264
- JP-A- 2016 061 407

## Description

### TECHNICAL FIELD

The utility model belongs to the technical field of automobile parts, and in particular, relates to a piston ring with a trapezoidal opening.

### BACKGROUND

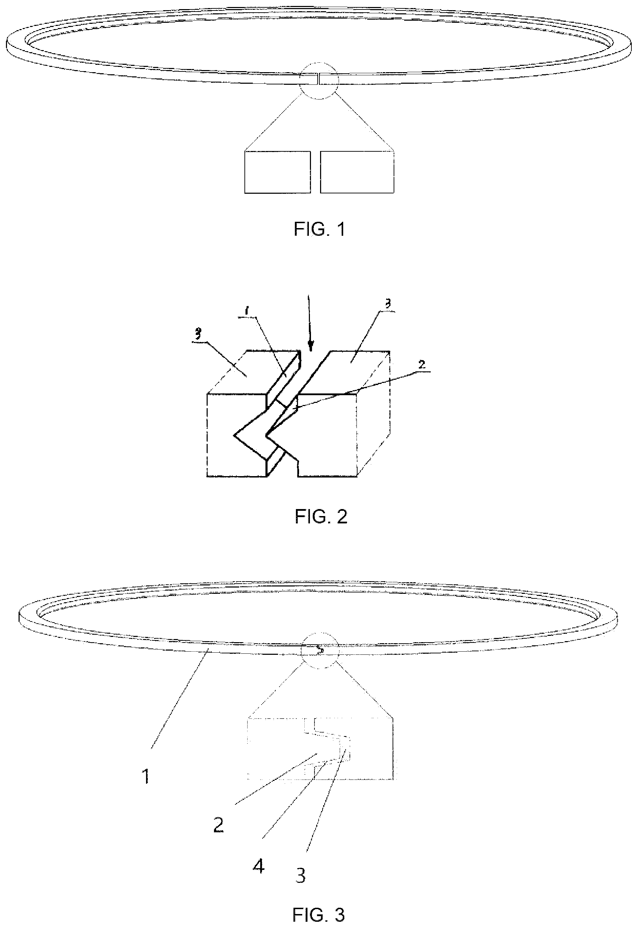

With the promulgation of China VI Vehicle Emission Regulation, new requirements are put forward for emission, particularly, NOx and particulate matters are likely to be tightened in the future; and these are closely related to the initial blowby quantity and engine oil consumption. As one of the core components of an engine, an engine piston and a piston ring are facing the challenge of higher blowby quantity and engine oil consumption. The low engine oil consumption and low blowby quantity of the piston and the piston ring in the initial stage of optimization and under the durable life can better ensure the emission within the whole life cycle can meet the requirements of the emission regulation. In the prior art, as shown in FIG. 1, which is a closed-end design of a currently common gas ring, in the specific planar closed end, due to the presence of a vertical closed channel after assembling, gas and engine oil in a combustion chamber can easily pass through the channel, which is not conducive to controlling gas blowby and engine oil consumption. Therefore, a gas ring with a special-shaped end face is proposed, with the following solution:
In the prior art that an opening of a piston ring shown in FIG. 2 is set as a V shape, this triangular design solution has the following inevitable disadvantages: the size of the piston ring is necessarily matched with the size of a cylinder liner perfectly, otherwise, a slightly larger radial size of the piston ring after assembling will cause the piston ring to support the cylinder liner, resulting in an excessive friction. A slightly smaller size will lead to an excessively large opening and an excessively large blowby quantity. Even if the size is appropriate, a V-shaped groove and a triangular shape are necessarily matched with each other perfectly. Once the sizes do not match, a surface contact seal will be changed into a line seal, so that the sealing effect is greatly reduced.

JP 2016-61407 A discloses a ring body of a piston ring, according to the preamble of claim 1, having a pair of joint portions and having both ends of one and the other of the joint portions. The thickness of the ring body on the side including one of the joint portions and the thickness on the side including the other of the joint portions are continuously or discontinuously different.

However, the design scheme that two ends of the opening of the piston ring are stepped with positive and negative matching also has the problem that once the sizes are not consistent, the blowby quantity at the opening is still large.

In view of this, it is necessary to propose a piston ring that can better control the blowby quantity of the engine and the engine oil consumption.

### SUMMARY

To solve the above technical problem, the utility model provides a piston ring with a trapezoidal opening, used for being sleeved on a piston ring groove of a piston and including a piston ring main body with an opening, where the piston ring main body is processed with at least one trapezoidal boss at an end of one side of the opening, and is processed with at least one groove matched with the trapezoidal boss at an end of the other side of the opening; a height of the boss is not greater than a depth of the groove; and the piston ring has different thicknesses on two sides of the opening, so that only one side surface of the trapezoidal boss is in contact with a corresponding side surface of the groove in the operation process of an engine.

According to the invention, a thickness of the piston ring is minimum at the position of the opening, and is increased to a thickness of the piston ring main body linearly at a certain position of 60° to 180° or -60° to -180°.

Preferably, the thickness of the piston ring at a boss side is less than the thickness of the piston ring main body.

Preferably, a top surface of the piston ring main body close to a side of a combustion chamber is a flat surface, and the thickness of the piston ring main body at the boss side from a lower surface to the top surface is increased linearly from the position of the opening to a certain position of 60° to 150°.

Preferably, the thickness of the piston ring at the boss side from a lower surface to a top surface is increased linearly from the position of the opening to a position of 90°.

According to the invention, the thickness of the piston ring at a groove side is less than the thickness of the piston ring main body.

Preferably, a top surface of the piston ring main body close to a side of a combustion chamber is a flat surface, and the thickness of the piston ring at the groove side from a lower surface to the top surface is increased linearly from the position of the opening to a certain position of -60° to - 150°.

Preferably, the thickness of the piston ring at the groove side from a lower surface to a top surface is increased linearly from the position of the opening to a position of -90°.

Preferably, the thickness of the boss is not less than half of the thickness of the piston ring main body.

Preferably, a gradual bottom surface part of the piston ring main body is obtained through grinding and electro corrosion.

Compared with the prior art, the utility model has the following advantages: due to different thicknesses of the two sides of the trapezoidal opening of the piston ring, in the operation process of the piston, a single-side seal formed by the boss and the groove not only can effectively reduce the quantity of high-pressure gas generated by the combustion chamber passing through the opening, but also can effectively prevent the engine oil from passing through the opening, thereby reducing the blowby quantity of the engine and the engine oil consumption.

### BRIEF DESCRIPTION OF THE DRAWINGS

FIG. 1 is a structural schematic diagram of a current existing piston ring (an enlarged diagram in which an upper part is a piston ring and a lower part is an opening);
FIG. 2 is a structural schematic diagram of a piston ring set as a V shape at an opening in the prior art;
FIG. 3 is a structural schematic diagram of a piston ring with a trapezoidal opening (an enlarged diagram in which an upper part is a piston ring main body and a lower part is an opening);
FIG. 4 is a structural schematic diagram of a piston ring after being subjected to an air pressure (the solid arrow is an air pressure direction, and the dotted arrow is an air flow direction); and
FIG. 5 is a structural schematic diagram of piston ring according to the invention after being subjected to an air pressure (the solid arrow is an air pressure direction, and the dotted arrow is an air flow direction).

Reference numerals in the drawings: 1-piston ring main body; 2-boss; 3-groove; 4-opening.

### DETAILED DESCRIPTION

The technical solutions of the utility model are further described non-restrictively in detail below with reference to the preferred embodiments and the accompanying drawings. In the description of the utility model, it should be understood that an azimuth or position relationship indicated by terms "center", "longitudinal", "transverse", "length", "width", "thickness", "upper", "lower", "front", "rear", "left", "right", "vertical", "horizontal", "top", "bottom", "inner", "outer", "clockwise", "anticlockwise", "axial", "radial", "circumferential" and the like is an azimuth or position relationship based on the accompanying drawings. In addition, terms "first" and "second" are used merely for description, and cannot be construed as indicating or implying relative importance or implicitly indicating a quantity of indicated technical features. Therefore, a feature defined by "first" or "second" may explicitly indicate or implicitly include at least one of such features. In the description of the utility model, "a plurality of" means at least two, for example two, three, etc., unless otherwise specifically defined. The embodiments described below with reference to the accompanying drawings are exemplary, and are only used to explain the utility model, but should not be construed as a limitation to the utility model.

### Embodiment 1

Referring to FIG. 3, a piston ring with a trapezoidal opening is used for being sleeved on a piston ring groove of a piston and includes a piston ring main body 4 with an opening 1, where the piston ring main body 1 is processed with at least one trapezoidal boss 2 at an end of one side of the opening, and is processed with at least one groove 3 matched with the trapezoidal boss at an end of the other side of the opening **4;** a height of the boss is not greater than a depth of the groove; and the piston ring has different thicknesses on two sides of the opening 4, so that only one side surface of the trapezoidal boss 2 is in contact with a corresponding side surface of the groove 3 in the operation process of an engine.

A thickness of the piston ring main body a boss side is less than a maximum thickness of the piston ring main body.

A top surface of the piston ring main body 1 close to a combustion chamber side is a flat surface, and the thickness of the piston ring main body at the boss side from a lower surface to the top surface is increased linearly to the maximum thickness of the piston ring main body from the position of the opening 4 to an arc length position corresponding to a 90° central angle. It is found in the actual test that taking a clockwise direction as positive, processing on the corresponding arc length within the central angle range of 60° to 180° enables the piston ring main body at the boss side to have good elasticity, and processing on the corresponding arc length in the central angle range of 90° has the comprehensive advantages in machining cost and elasticity.

The thickness of the boss 2 is not less than half of the maximum thickness of the piston ring main body 1.

A gradual bottom surface part of the piston ring main body 1 is obtained through grinding.

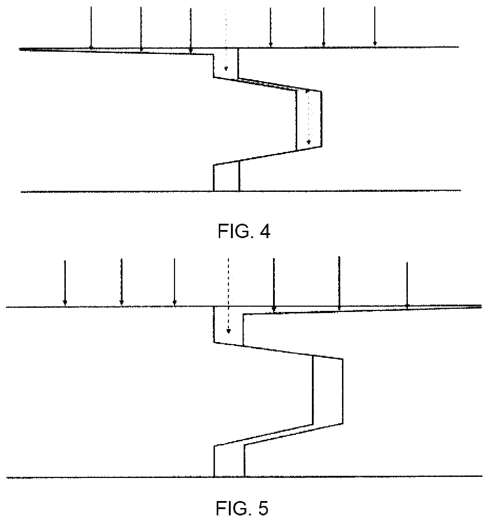

The working principle: referring to FIG. 4, after the piston ring is assembled, in the working process, when the piston ring is subjected to a pressure of a high-pressure gas from a combustion chamber, the piston ring, the piston ring is pushed to be pressed on a ring bank of a ring groove; and since one side of a protrusion 2 of the piston ring main body has a slightly smaller thickness, after being subjected to the air pressure, the boss 2 moves downward, so that the boss 2 at the opening is in contact with a lower surface of a groove 3, thereby achieving a single-side seal of the lower surface.

### Embodiment 2

Referring to FIG. 4, in the piston ring according to the invention the thickness of the piston ring main body at the groove side is less than the maximum thickness of the piston ring main body 1. The thickness of the piston ring main body 1 at the groove side from the lower surface to the top surface is increased linearly from the position of the opening 4 to an arc length position corresponding to a -90° central angle. Referring to FIG. 5, after the piston ring is assembled, in the working process, when the piston ring is subjected to a pressure of a high-pressure gas from a combustion chamber, the piston ring, the piston ring is pushed to be pressed on a ring bank of a ring groove; and since one side of a groove 3 of the piston ring main body has a slightly smaller thickness, after being subjected to the air pressure, the groove 3 moves downward, so that the boss 2 at the opening 4 is in contact with an upper surface of the groove 3, thereby achieving a single-side seal of the upper surface.

The above embodiments only express several embodiments of the utility model, and the description thereof is more specific and detailed. However, these embodiments cannot be construed as a limitation to the patent scope of the utility model. It should be pointed out that several variations and improvements may be made by those of ordinary skill in the art without departing from the scope of the appended claims.

## Claims

1. A piston ring with a trapezoidal opening, used for being sleeved on a piston ring groove of a piston and comprising a piston ring main body (1) with an opening (4),
- wherein the piston ring main body (1) is processed with at least one trapezoidal boss (2) at an end of one side of the opening (4),
- wherein the piston ring main body (1) is processed with at least one groove (3) matched with the trapezoidal boss (2) at an end of the other side of the opening (4);
- wherein a height of the boss (2) is not greater than a depth of the groove (3);
- wherein the piston ring has different thicknesses on two sides of the opening (4), so that only one side surface of the trapezoidal boss (2) is in contact with a corresponding side surface of the groove (3) in the operation process of an engine; and
- wherein a thickness of the piston ring is minimum at the position of the opening (4), and is increased to a thickness of the piston ring main body (1) linearly at a certain position of 60° to 180° or -60° to -180°,
**characterized**
**in that** the thickness of the piston ring at a groove side is less than the thickness of the piston ring main body (1).

2. The piston ring with a trapezoidal opening according to claim 1, wherein the thickness of the piston ring at a boss side is less than the thickness of the piston ring main body (1).

3. The piston ring with a trapezoidal opening according to claim 2, wherein a top surface of the piston ring main body (1) close to a side of a combustion chamber is a flat surface, and the thickness of the piston ring main body (1) at the boss side from a lower surface to the top surface is increased linearly from the position of the opening (4) to a certain position of 60° to 150°.

4. The piston ring with a trapezoidal opening according to claim 3, wherein the thickness of the piston ring at the boss side from a lower surface to a top surface is increased linearly from the position of the opening (4) to a position of 90°.

5. The piston ring with a trapezoidal opening according to claim 1, wherein a top surface of the piston ring main body (1) close to a side of a combustion chamber is a flat surface, and the thickness of the piston ring main body (1) at the groove side from the lower surface to the top surface is increased linearly from the position of the opening (4) to a certain position of -60° to - 150°.

6. The piston ring with a trapezoidal opening according to claim 5, wherein the thickness of the piston ring at the groove side from the lower surface to the top surface is linearly increased from the position of the opening (4) to the position of -90°.

7. The piston ring with a trapezoidal opening according to claim 6, wherein a thickness of the boss (2) is not less than half of the thickness of the piston ring main body (1).

## Patentansprüche

1. Kolbenring mit einer trapezförmigen Öffnung, der zum Aufstecken in eine Kolbenringnut eines Kolbens dient und einen Kolbenring-Hauptkörper (1) mit einer Öffnung (4) umfasst,
- wobei der Kolbenring-Hauptkörper (1) an einem Ende einer Seite der Öffnung (4) mindestens mit einem trapezförmigen Vorsprung (2) bearbeitet wird,
- wobei der Kolbenring-Hauptkörper (1) mit mindestens einer Nut (3) bearbeitet wird, die mit dem trapezförmigen Vorsprung (2) an einem Ende der anderen Seite der Öffnung (4) übereinstimmt;
- wobei die Höhe des Vorsprungs (2) nicht größer ist als die Tiefe der Nut (3);
- wobei der Kolbenring auf zwei Seiten der Öffnung (4) unterschiedliche Dicken aufweist, so dass im Betriebsvorgang des Motors nur eine Seitenfläche des trapezförmigen Vorsprungs (2) mit einer entsprechenden Seitenfläche der Nut (3) in Kontakt steht; und
- wobei eine Dicke des Kolbenrings an der Stelle der Öffnung (4) minimal ist und an einer bestimmten Position von 60° bis 180° bzw. -60° bis -180° linear auf die Dicke des Kolbenring-Hauptkörpers (1) ansteigt,
**dadurch gekennzeichnet, dass** die Dicke des Kolbenrings an der Nutseite geringer ist als die Dicke des Kolbenring-Hauptkörpers (1).

2. Kolbenring mit einer trapezförmigen Öffnung nach Anspruch 1, wobei die Dicke des Kolbenrings an der Vorsprungsseite geringer ist als die Dicke des Kolbenring-Hauptkörpers (1).

3. Kolbenring mit einer trapezförmigen Öffnung nach Anspruch 2, wobei eine Oberseite des Kolbenring-Hauptkörpers (1) nahe einer Seite eines Brennraums eine ebene Fläche ist und die Dicke des Kolbenring-Hauptkörpers (1) an der Vorsprungsseite, von einer unteren Fläche zu einer oberen Fläche, von der Position der Öffnung (4) bis zu einer bestimmten Position von 60° bis 150° linear zunimmt.

4. Kolbenring mit einer trapezförmigen Öffnung nach Anspruch 3, wobei die Dicke des Kolbenrings an der Vorsprungsseite, von einer unteren Fläche zu einer oberen Fläche linear von der Position der Öffnung (4) bis zu einer Position von 90° zunimmt.

5. Kolbenring mit einer trapezförmigen Öffnung nach Anspruch 1, wobei eine Oberseite des Kolbenring-Hauptkörpers (1) nahe einer Seite des Brennraums eine ebene Fläche ist und die Dicke des Kolbenring-Hauptkörpers (1) an der Nutseite von einer unteren Fläche zu einer oberen Fläche, von der Position der Öffnung (4) bis zu einer bestimmten Position von -60° bis -150° linear zunimmt.

6. Kolbenring mit einer trapezförmigen Öffnung nach Anspruch 5, wobei die Dicke des Kolbenrings an der Nutseite von einer unteren Fläche zu einer oberen Fläche, von der Position der Öffnung (4) bis zur Position -90° linear zunimmt.

7. Kolbenring mit einer trapezförmigen Öffnung nach Anspruch 6, wobei die Dicke des Vorsprungs (2) nicht weniger als die Hälfte der Dicke des Kolbenring-Hauptkörpers (1) beträgt.

## Revendications

1. Segment de piston à ouverture trapézoïdale, destiné à être inséré dans une gorge de segment de piston d'un piston et comprenant un corps principal de segment de piston (1) avec une ouverture (4),
- dans lequel le corps principal de segment de piston (1) est traité avec au moins un bossage trapézoïdal (2) à une extrémité d'un côté de l'ouverture (4),
- dans lequel le corps principal de segment de piston (1) est traité avec au moins une gorge (3) correspondant au bossage trapézoïdal (2) à une extrémité de l'autre côté de l'ouverture (4) ;
- dans lequel la hauteur du bossage (2) n'est pas supérieure à la profondeur de la gorge (3) ;
- dans lequel le segment de piston présente des épaisseurs différentes de part et d'autre de l'ouverture (4), de sorte que seule une surface latérale du bossage trapézoïdal (2) soit en contact avec une surface latérale correspondante de la gorge (3) pendant le fonctionnement d'un moteur ; et
- dans lequel l'épaisseur du segment de piston est minimale à l'emplacement de l'ouverture (4), et est augmentée linéairement jusqu'à l'épaisseur du corps principal de segment de piston (1) à une certaine position de 60° à 180° ou de -60° à -180°,
**caractérisé en ce que** l'épaisseur du segment de piston du côté d'une gorge est inférieure à l'épaisseur du corps principal de segment de piston (1).

2. Segment de piston à ouverture trapézoïdale selon la revendication 1, dans lequel l'épaisseur du segment de piston du côté du bossage est inférieure à l'épaisseur du corps principal de segment de piston (1).

3. Segment de piston à ouverture trapézoïdale selon la revendication 2, dans lequel une surface supérieure du corps principal de segment de piston (1) près d'un côté d'une chambre de combustion est une surface plane, et l'épaisseur du corps principal de segment de piston (1) du côté du bossage d'une surface inférieure à la surface supérieure est augmentée linéairement de la position de l'ouverture (4) à une certaine position de 60° à 150°.

4. Segment de piston à ouverture trapézoïdale selon la revendication 3, dans lequel l'épaisseur du segment de piston du côté du bossage d'une surface inférieure à une surface supérieure est augmentée linéairement de la position de l'ouverture (4) à une position de 90°.

5. Segment de piston à ouverture trapézoïdale selon la revendication 1, dans lequel une surface supérieure du corps principal de segment de piston (1) près d'un côté d'une chambre de combustion est une surface plane, et l'épaisseur du corps principal de segment de piston (1) du côté de la gorge de la surface inférieure à la surface supérieure est augmentée linéairement de la position de l'ouverture (4) à une certaine position de - 60° à -150°.

6. Segment de piston à ouverture trapézoïdale selon la revendication 5, dans lequel l'épaisseur du segment de piston du côté de la gorge de la surface inférieure à la surface supérieure est augmentée linéairement de la position de l'ouverture (4) à la position de - 90°.

7. Segment de piston à ouverture trapézoïdale selon la revendication 6, dans lequel une épaisseur du bossage (2) n'est pas inférieure à la moitié de l'épaisseur du corps principal de segment de piston (1).
